(19) Europäisches Patentamt
European Patent Office
Office européen des brevets

(11) **EP 1 737 280 B1**

(12) **EUROPÄISCHE PATENTSCHRIFT**

(45) Veröffentlichungstag und Bekanntmachung des Hinweises auf die Patenterteilung:
**27.02.2008 Patentblatt 2008/09**

(51) Int Cl.:
***H05B 41/292*** *(2006.01)*

(21) Anmeldenummer: **06011751.2**

(22) Anmeldetag: **07.06.2006**

(54) **Schaltungsanordnung und Verfahren zum Betrieb von Hochdruckentladungslampen**

Circuit and method of operating high pressure discharge lamps

Circuit et procédé pour le fonctionnement des lampes à décharge à haute pression

(84) Benannte Vertragsstaaten:
**AT DE FR GB HU**

(30) Priorität: **17.06.2005 DE 102005028239**

(43) Veröffentlichungstag der Anmeldung:
**27.12.2006 Patentblatt 2006/52**

(73) Patentinhaber: **Patent-Treuhand-Gesellschaft für elektrische Glühlampen mbH 81543 München (DE)**

(72) Erfinder:
• **Bernitz, Franz**
**82008 Unterhaching (DE)**
• **Breuer, Christian**
**81735 München (DE)**
• **Huber, Andreas**
**82216 Maisach (DE)**
• **Wolter, Kai, Dr.**
**14197 Berlin (DE)**

(74) Vertreter: **Raiser, Franz**
**Osram GmbH**
**Postfach 22 16 34**
**80506 München (DE)**

(56) Entgegenhaltungen:
EP-A- 1 076 478        DE-A1- 19 715 254
FR-A- 2 646 538        US-A- 5 422 548

**Beschreibung**

**Technisches Gebiet**

Die Erfindung betrifft Schaltungsanordnungen, die in Betriebsgeräten zum Betrieb von Hochdruckentladungslampen, im folgenden auch kurz Lampe genannt, eingesetzt werden. Es handelt sich dabei insbesondere um Schaltungsanordnungen, die geeignet sind eine Explosion einer betriebenen Lampe im voraus zu detektieren und den Betrieb der Lampe zu unterbrechen. Im weiteren betrifft die Erfindung ein Verfahren zum Vorhersagen des Ausfalls einer Lampe, insbesondere durch Explosion.

**Stand der Technik**

Bei Hochdruckentladungslampen besteht die Gefahr, dass die Lampe am Lebensdauerende explodiert. Diese Gefahr besteht besonders bei Höchstdruckentladungslampen.

Derartige Lampen wurden für optisch anspruchsvolle Anwendungen wie Datenprojektoren und Rückprojektionsfernseher entwickelt. Gerade bei diesen Anwendungen kann eine Lampenexplosion gefährlich für Personen werden und im eingesetzten Gerät erheblichen Schaden anrichten. Beim Betrieb von Hochdruckentladungslampen müssen deshalb Maßnahmen zum Schutz gegen Lampenexplosionen ergriffen werden. Üblicherweise wird die Lampe in einem Gehäuse untergebracht, das eine Gefährdung von Personen ausschließt. Durch das Gehäuse werden auch größere Schäden am eingesetzten Gerät vermieden. Allerdings kann nach einer Explosion eine Reparatur eines Geräts notwendig werden. Zudem erzeugt eine Explosion einen Knall, der dem Vertrauen eines Benutzers zu einem Gerät abträglich ist.

Deshalb besteht beim Betrieb von Hochdruckentladungslampen das Problem, die Wahrscheinlichkeit einer Lampen-Explosion auf ein Minimum zu reduzieren. Dies geschieht im Stand der Technik einfach dadurch, dass Lampen beim Erreichen einer vorgegeben Betriebsdauer ausgewechselt werden auch, wenn sie noch funktionstüchtig sind. Dies führt dazu, dass die Lebensdauer der Lampen nicht vollständig ausgenutzt wird. Zudem gibt es auch Lampen, die explodieren, bevor sie die vorgegebene Betriebsdauer erreichen.

In der Schrift FR 2646538 (Leleve) ist eine Beleuchtungsvorrichtung für Automobile offenbart, die eine Tiefentladung einer Autobatterie verhindern kann. Dazu ist eine Vorrichtung vorgesehen, die einen Kurzschluss erkennt und gegebenen Falls die Beleuchtungsvorrichtung vom Bordnetz abklemmt.

In der Schrift DE 197 15 254 A1 und US 5422548 (Yamashita) ist jeweils ein Betriebsgerät für Gasentladungslampen beschrieben, das das Lebensdauerende einer Lampe erkennt. Die Lampe wird außer Betrieb genommen falls ihre Brennspannung länger als eine vorgebbare Zeit durchgängig über einem Grenzwert liegt.

In der Schrift EP 1076478A2 (Klinkenberg) ist ein Verfahren zur Überwachung einer Gasentladungslame beschrieben, das eine Explosion der Lampe verhindern soll. Dazu wird ein Warnsignal ausgegeben, falls die Lampenspannung deutlich absinkt.

**Darstellung der Erfindung**

Es ist Aufgabe der vorliegenden Erfindung, eine Schaltungsanordnung zum Betrieb von Hochdruckentladungslampen bereitzustellen, die eine verbesserte Vorhersage einer Lampenexplosion ermöglicht und einen Lampenbetrieb beendet, bevor die Lampe explodiert.

Dies wird durch eine Schaltungsanordnung erreicht, die die Merkmale des Anspruchs 1 aufweist.

Es ist ein weiterer Aspekt der Erfindung, ein Betriebsgerät zum Betreiben von Hochdruckentladungslampen bereitzustellen, das eine oben genannte Schaltungsanordnung enthält, die eine Vorhersage einer Lampenexplosion ermöglicht.

Es ist ein weiterer Aspekt der Erfindung, ein Verfahren zum Betreiben von Hochdruckentladungslampen bereitzustellen, das eine Vorhersage einer Lampenexplosion ermöglicht.

Beim Betrieb einer Hochdruckentladungslampe stellt sich zwischen den Anschlüssen der Lampe eine Brennspannung ein. Die Brennspannung steigt nach dem Zünden einer Lampe an, bis sich in der Lampe ein Betriebsdruck eingestellt hat. Wenn der Betriebsdruck erreicht ist, bleibt die Brennspannung im wesentlichen konstant. Im allgemeinen stellt sich durch Abbrand der Elektroden der Lampe ein Anstieg der Brennspannung im Verlauf der Lebensdauer ein.

Im Vergleich zu ungefährdeten Lampen hat sich gezeigt, dass der zeitliche Verlauf der Brennspannung von Lampen, die kurz vor der Explosion stehen, charakteristische Veränderungen aufweist. Eine erste Veränderung ist beim Hochlauf der Brennspannung nach der Zündung feststellbar. Eine Lampe, die kurz vor der Explosion steht, erreicht früher das Plateau eines stabilen Betriebsdrucks, bei dem die Brennspannung zunächst näherungsweise konstant bleibt. Die zeitliche Änderung der Brennspannung ist demnach bei gefährdeten Lampen größer als bei ungefährdeten. Die oben genannte Bewertungszahl ist also bei gefährdeten Lampen größer als bei ungefährdeten. Erfindungsgemäß führt der Vergleich der Bewertungszahl mit einem vorgegeben Grenzwert mit Hilfe einer Abschalteinrichtung zur Unterbrechung des Betriebs der Lampe.

Im Laufe des Betriebs stellt sich die zweite Veränderung des Brennspannung ein. Unmittelbar vor der Explosion fällt die Brennspannung stark ab. Auch diese zeitliche Änderung der Brennspannung führt Erfindungsgemäß zu einer erhöhten Bewertungszahl und damit Abschalten der Lampe.

## Kurze Beschreibung der Zeichnungen

Im folgenden soll die Erfindung anhand von Ausführungsbeispielen unter Bezugnahme auf Zeichnungen näher erläutert werden. Es zeigen:

Figur 1    den Verlauf der Brennspannung einer explosions-gefährdeten und einer nicht explosions-gefährdeten Hochdruck-Entladungslampe nach der Zündung,

Figur 2    den Verlauf der Brennspannung einer Hochdruck-Entladungslampe vor der Explosion,

Figur 3    Blockschaltbild einer erfindungsgemäßen Schaltungsanordnung.

## Bevorzugte Ausführung der Erfindung

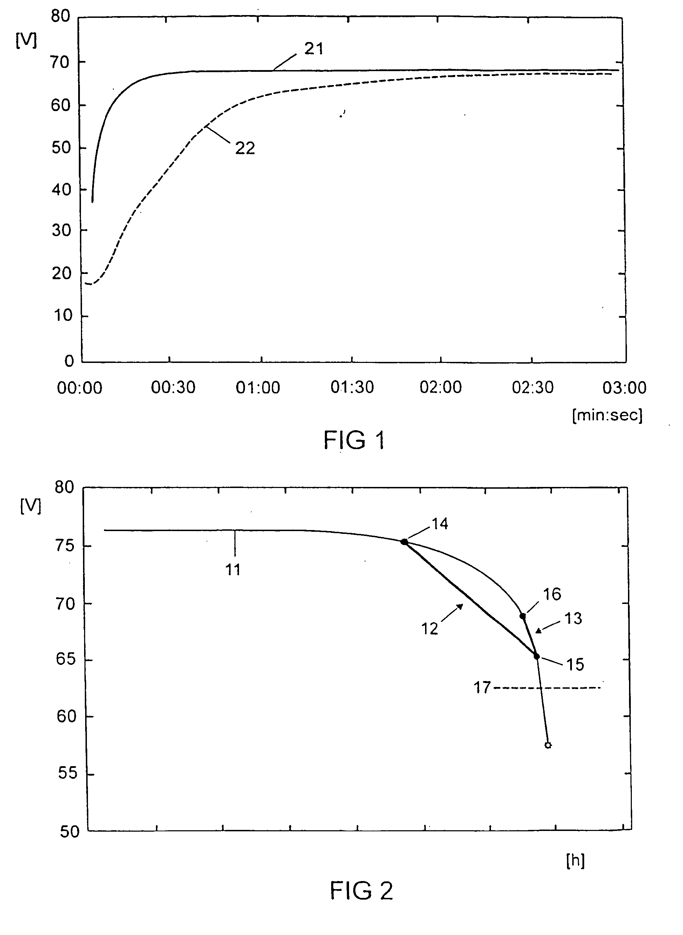

Figur 1 zeigt Brennspannungsverläufe unmittelbar nach der Zündung einer 250 W Hochdruck-Entladungslampe für Projektionsanwendungen. Kurve 22 wurde mit einer Lampe aufgenommen, die nicht explosions-gefährdet ist. Auf der x-Achse ist die Zeit in Minuten und Sekunden dargestellt. Kurve 21 zeigt den Brennspannungsverlauf einer explosions-gefährdeten Lampe. Man erkennt, dass sich bei der nicht explosions-gefährdeten Lampe nach ca. 3 Minuten ein stabiler Brennspannungswert erreicht ist, während bei der explosions-gefährdeten Lampe dies schon nach weniger als einer Minute der Fall ist. Damit ergibt sich bei der explosions-gefährdeten Lampe eine wesentlich schnellere zeitliche Änderung der Brennspannung, was zur Vorhersage einer Lampenexplosion herangezogen werden kann. Bei der Auswertung der zeitlichen Änderung der Brennspannung unmittelbar nach einer Zündung, wertet eine Auswerte-Einrichtung eine steigende Brennspannung beispielsweise als positiv und stellt eine positive Bewertungszahl zur Verfügung, dies ohne Beschränkung der Allgemeinheit. Dem entsprechend unterbricht eine Abschalt-Einrichtung den Betrieb einer Lampe, falls die Bewertungszahl einen positiven Grenzwert überschreitet. Gleichermaßen kann eine steigende Brennspannung zu einer negativen Bewertungszahl führen und das Unterschreiten eines negativen Grenzwerts zur Abschaltung führen.

Figur 2 zeigt in Kurve 11 den zeitlichen Verlauf der Brennspannung einer 250 W Hochdruck-Entladungslampe für Projektionsanwendungen in den letzten 6 Stunden vor der Explosion. Die Explosion ist am rechten Endpunkt von Kurve 11 durch einen Stern angedeutet. Deutlich ist zu erkennen, wie ca. 2 h vor der Explosion die Brennspannung abzufallen beginnt. Erfindungsgemäß wird die diese zeitliche Änderung der Brennspannung von einer Mess-Einrichtung erfasst und einer Auswerte-Einrichtung zugeführt. Die Auswerte-Einrichtung erzeugt aus den Messwerten eine Bewertungszahl, die ein Maß für die zeitliche Änderung der Brennspannung darstellt. Ohne Beschränkung der Allgemeinheit führt beispielsweise eine fallende Brennspannung zu einer positive Bewertungszahl. Dem entsprechend unterbricht eine Abschalt-Einrichtung den Betrieb einer Lampe, falls die Bewertungszahl einen positiven Grenzwert überschreitet. Gleichermaßen kann eine fallende Brennspannung zu einer negativen Bewertungszahl führen und das Unterschreiten eines negativen Grenzwerts zur Abschaltung führen.

Die Auswertung der zeitlichen Änderung der kann analog oder digital erfolgen. Bei einer analogen Lösung kann eine Messgröße für die Brennspannung über einen Hochpass bewertet werden. Eine schnellere Änderung der Brennspannung führt dann zu einem stärkeren Signal nach dem Hochpass.

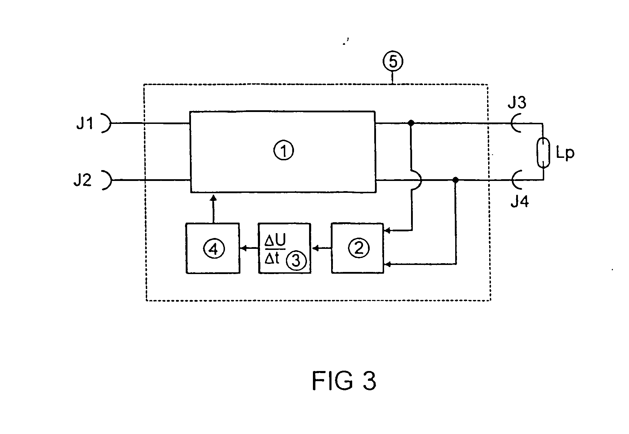

Meist wird jedoch eine digitale Lösung bevorzugt, da damit ohne großen Aufwand eine komplexe Auswertung des Brennspannungsverlaufs realisiert werden kann. In Figur 3 ist ein allgemeines Blockschaltbild einer erfindungsgemäßen Schaltungsanordnung 5 dargestellt. Die Schaltungsanordnung 5 enthält eine Stromversorgung 1 für die Lampe Lp. Die Stromversorgung 1 ist über Klemmen J1 und J2 an eine Energiequelle anschließbar und stellt über Klemmen J3 und J4 einen für den Betrieb der Lampe Lp geeigneten Strom zur Verfügung. Parallel zu den Klemmen J3 und J4 wird die Brennspannung abgegriffen und einer Messeinrichtung 2 zugeführt. Aufgabe der Mess-Einrichtung 2 ist es einer Auswerte-Einrichtung 3 ein Signal zur Verfügung zu stellen, das proportional zur Brennspannung ist und in einer elektrischen Form vorliegt, wie sie von der Auswerte-Einrichtung 3 verarbeitet werden kann. Im einfachsten Fall besteht die Messeinrichtung 2 aus einem Spannungsteiler, der den Pegel der Brennspannung an die Auswerte-Einrichtung 3 anpasst. Dies kann auch mit Hilfe von Übertragern geschehen, die eine Potenzialtrennung bewerkstelligen. Die Messeinrichtung 2 kann auch nicht direkt mit den Klemmen J3 und J4 verbunden sein, sondern interne Größen der Stromversorgung 1 erfassen und daraus ein zur Brennspannung proportionales Signal ableiten.

Die Auswertung der zeitlichen Änderung der Brennspannung erfolgt vorteilhaft mittels eines Softwareprogramms in einem Mikrokontroller.

Zunächst soll die Auswertung der fallenden Brennspannung vor der Explosion erläutert werden. Grundsätzliche Probleme der Messtechnik, die dabei auftreten können und deren Lösungen können auf die Auswertung der Brennspannung nach der Zündung übertragen werden. Wie aus Figur 2 ersichtlich beginnt der Abfall der Brennspannung ca. 2 h vor der Explosion. Die Auswerte-Einrichtung 3 wertet daher die Brennspannung in einem Langzeitfenster aus, das länger als eine Stunde ist. Wie in Figur 2 dargestellt, vergleicht dazu die Auswerte-Einrichtung 3 einen aktuell von der Messeinrichtung 2 gelieferten Wert 15 mit einem Messwert 14 für die Brennspannung, der vor mehr als einer Stunde abgespeichert wurde. Beispielsweise errechnet die Auswerte-Einrichtung die Differenz eines 2 h alten Messwerts und eines aktuellen Werts und erhält damit ein Maß für den 2 h-Gradient (Figur 2, 12) der Brennspannung. Im einfachsten Fall ist diese Differenz gleich einer Bewertungszahl. Die Bewertungszahl wird wie in Figur 3 ersichtlich einer Abschalt-Einrichtung 4 zugeführt. Diese vergleicht die Bewertungszahl mit einem vorgegebenen, abgespeicherten Grenzwert und unterbricht den Lampenbetrieb, falls der Grenzwert überschritten wird.

Die in gattungsgemäßen Betriebsgeräten eingesetzten Mikrokontroller sind in der Lage im Takt von einer Millisekunde einen aktuellen Messwert für die Brennspannung zu erfassen und mit einem abgespeicherten Wert zu vergleichen. Um Speicherplatz einzusparen wird nicht jede Millisekunde ein neuer Messwert für 2 h abgespeichert. Es ist zur Vorhersage einer Lampenexplosion ausreichend, wenn nur jede Sekunde ein neuer Messwert abgespeichert wird. Zur Unterdrückung von Störungen ist es vorteilhaft, wenn der abgespeicherte Wert durch Mittelwertbildung aus mehreren Messwerten gebildet wird. Üblicherweise bildet der Mikrokontroller dafür ein sog. laufendes Integral über ein Zeitfenster von einer Sekunde.

Eine genauere Vorhersage der Explosion kann erreicht werden, wenn die Auswerte-Einrichtung 3 die zeitliche Änderung der Brennspannung in einem Kurzzeitfenster auswertet, das zwischen 10 und 20 Minuten lang ist. Wie in Figur 2 beispielhaft dargestellt, vergleicht die Auswerte-Einrichtung 3 einen aktuellen Messwert 15 mit einem Messwert 16, der 15 Minuten zuvor abgespeichert wurde. Aus der Differenz der Messwerte 16 und 15 ergibt sich ein 15 Minuten-Gradient. Im einfachsten Fall ist dieser 15 Minuten-Gradient gleich einer Bewertungszahl, die in der Auswerte-Einrichtung 3 mit einem vorgegebenen Grenzwert vergleicht. '

Eine noch genauere Vorhersage der Explosion wird erreicht, indem sowohl ein Gradient sowohl in einem Langzeitfenster als auch in einem Kurzzeitfenster gebildet wird. Damit erhält man 2 Kriterien, die zu einer Bewertungszahl zusammengefasst werden müssen. Dies erreicht die Auswerte-Einrichtung 3 dadurch, dass jedes Kriterium gewichtet und die gewichteten Kriterien aufsummiert werden. Dies kann durch folgende Formel ausgedrückt werden:

$$Bewertungszahl = \sum_n (Kriterium_n \cdot Gewichtung_n)$$

Eine weitere Steigerung der Genauigkeit der Vorhersage der Lampenexplosion wird erreicht, wenn die Auswerte-Einrichtung 3 zum Bereitstellen der Bewertungszahl die Differenz oder den Quotienten der Auswertung im Langzeitfenster und der Auswertung im Kurzzeitfenster bildet. Damit wird ein weiteres Kriterium in obige Formel eingefügt, das eine Aussage darüber liefert, wie stark der Gradient der Brennspannung gestiegen ist. Der Quotient liefert dabei eine bessere Aussage für die Vorhersage. Jedoch bedeutet die Berechnung des Quotienten gegenüber der Differenz einen höheren Aufwand im Mikrokontroller.

Eine weitere Steigerung der Genauigkeit der Vorhersage der Lampenexplosion wird erreicht, wenn die Auswerte-Einrichtung zum Bereitstellen der Bewertungszahl die momentane Brennspannung auswertet. Damit wird der Tatsache Rechnung getragen, dass eine sehr niedrige Brennspannung bei geregelter Lampenleistung zu einem sehr hohen Lampenstrom führt. Dies kann einerseits zur Zerstörung des Betriebsgeräts und andererseits durch eine hohe Strombelastung der Lampen-Elektroden zu Zerstörung der Lampe führen. Unterschreitet die Brennspannung einen vorgegebenen Wert, wie er durch die gestrichelte Linie 17 in Figur 2 angedeutet ist, ist es daher vorteilhaft denn Lampenbetrieb zu unterbrechen. Dies kann als weiteres Kriterium in obige Formel eingefügt werden.

Die Bereitstellung dieses Kriteriums kann auf unterschiedliche Weise erfolgen. Das Kriterium kann der Reziprokwert der Brennspannung sein. Es kann auch die Differenz eines vorgegebenen unteren Limits für die Brennspannung und der aktuellen Brennspannung sein. Eine weitere Möglichkeit zur Bereitstellung dieses Kriteriums besteht in einer stückweise definierten funktionalen Abhängigkeit von der aktuellen Brennspannung: Ist die aktuelle Brennspannung über einem unteren Limit, so hat das Kriterium den Wert Null; fällt die aktuelle Brennspannung unter dieses untere Limit, so hat das Kriterium den Wert 1. Durch eine starke Gewichtung dieses Kriteriums führt eine Unterschreitung des Limits zur Abschaltung der Lampe.

Beispielhaft für eine 250W Lampe werden im folgenden geeignete Gewichtungen angegeben:

Kriterium 1: 15 Minuten Gradient; Gewichtung 1 = 50

Kriterium 2: 2 Stunden Gradient; Gewichtung 2 = 10

Kriterium 3: Kriterium 1/ Kriterium 2; Gewichtung 3 = 120

Kriterium 4: Reziprokwert der aktuellen Brennspannung; Gewichtung 4 = 6000

Für die so berechnete Bewertungszahl ist ein Grenzwert von 500 geeignet, um eine Lampenexplosion mit großer Sicherheit auszuschließen.

Die Gewichtungen beim Betrieb von anderen Lampen müssen durch Versuche ermittelt werden.

Die oben beschriebene komplexe Auswertung der Brennspannung vor der Explosion, wie sie in Figur 2 dargestellt ist, kann auch auf den Brennspannungsverlauf nach der Zündung der Lampe gemäß Figur 1 angewendet werden. Dazu sind natürlich andere Gewichtungen zu wählen. Es können auch andere oder weitere Kriterien eingeführt werden.

Möglich ist auch eine Auswertung der Brennspannung nach der Zündung und vor der Explosion. Dabei werden die Gewichtungen vorteilhaft zeitabhängig verändert. Unmittelbar nach der Zündung sind die Gewichtungen so gewählt, dass eine explosionsgefährdete Lampe aufgrund des abnormal schnellen Anstiegs der Brennspannung erkannt wird. Beispielsweise 3 Minuten nach der Zündung werden die Gewichtungen so abgeändert, dass eine Explosion aufgrund das Abfalls der Brennspannung vorhersagbar wird. Dabei kann die Auswertung der Brennspannung nach der Zündung den weiteren zeitlichen Verlauf der Gewichtungen beeinflussen. Wird beim Hochlauf der Lampe nach der Zündung festgestellt, dass die Lampe möglicherweise explosionsgefährdet ist, so kann diese Erkenntnis in die weitere Auswertung der Brennspannung einfließen. Gleich wirkend kann auch der abgespeicherte Grenzwert in der Abschalt-Einrichtung 4 von der Auswertung der Brennspannung nach der Zündung abhängig gemacht werden.

## Patentansprüche

1.  Schaltungsanordnung zum Betrieb von Hochdruckentladungslampen mit folgenden Merkmalen:

    • zwei Anschlussklemmen (J3, J4) zum Anschließen einer Hochdruckentladungslampe (Lp), wobei zwischen den Anschlussklemmen (J3, J4) während des Betriebs einer Hochdruckentladungslampe eine Brennspannung anliegt,
    • eine Mess-Einrichtung (2), zum Messen der Brennspannung,
    • eine Auswerte-Einrichtung (3), die mit der Messeinrichtung (2) gekoppelt ist und geeignet ist, eine Bewertungszahl bereit zu stellen, die ein Maß für die zeitliche Änderung der Brennspannung darstellt,
    wobei die Auswerte-Einrichtung (3) die zeitliche Änderung der Brennspannung in einem Langzeitfenster auswertet, das länger als eine Stunde ist und wobei die Auswerte-Einrichtung (3) die zeitliche Änderung der Brennspannung in einem Kurzzeitfenster auswertet, das zwischen 10 und 20 Minuten lang ist,
    • eine Abschalt-Einrichtung (4), die den Betrieb einer angeschlossenen Hochdruckentladungslampe unterbricht, falls der Wert der Bewertungszahl einen vorgegebenen Grenzwert überschreitet.

    **dadurch gekennzeichnet, dass** die Auswerte-Einrichtung (3) zum Bereitstellen der Bewertungszahl die Differenz oder den Quotienten der Auswertung im Langzeitfenster und der Auswertung im Kurzzeitfenster bildet.

2.  Schaltungsanordnung nach Anspruch 1,
    **dadurch gekennzeichnet, dass**
    die Auswerte-Einrichtung (3) die Bewertungszahl gemäß folgender Formel berechnet:

    $$Bewertungszahl = \sum_n \left( Kriterium_n \cdot Gewichtung_n \right)$$

    wobei n eine natürliche Zahl ist und
    $Kriterium_1$ die zeitliche Änderung der Brennspannung in einem Kurzzeitfenster ist, das zwischen 10 und 20 Minuten lang ist,
    $Kriterium_2$ die zeitliche Änderung der Brennspannung in einem Langzeitfenster ist, das länger als eine Stunde ist,

$Kriterium_3$ ist $Kriterium_1 / Kriterium_2$,

$Kriterium_4$ ist der Reziprokwert der momentanen Brennspannung

und wobei $Gewichtung_n$ ein Gewichtungsfaktor für das jeweilige Kriterium ist.

**3.** Schaltungsanordnung nach Anspruch 1,
**dadurch gekennzeichnet, dass**
nach einer Inbetriebnahme die Auswerte-Einrichtung (3) eine steigende Brennspannung positiv wertet und der Grenzwert positiv ist und im Laufe des Betriebs die Auswerte-Einrichtung (3) dazu übergeht eine fallende Brennspannung positiv zu bewerten.

**4.** Betriebsgerät zum Betreiben von Hochdruckentladungslampen, das eine Schaltungsanordnung gemäß einem der Ansprüche 1 bis 3 enthält.

**5.** Verfahren zum Vorhersagen des Ausfalls einer Hochdruckentladungslampe mit folgenden Schritte:

• Festlegen eines Grenzwerts;
• Inbetriebnahme der Hochdruckentladungslampe;
• Ermitteln eines ersten Kriteriums, das der zeitlichen Änderung der Brennspannung in einem Langzeitfenster entspricht, das länger als eine Stunde ist;
• Ermitteln eines zweiten Kriteriums, das der zeitlichen Änderung der Brennspannung in einem Kurzzeitfenster entspricht, das zwischen 10 und 20 Minuten lang ist;
• Berechnung einer Bewertungszahl;
• Außerbetriebnahme der angeschlossenen Hochdruckentladungslampe, falls der Wert der Bewertungszahl einen vorgegebenen Grenzwert überschreitet;

**dadurch gekennzeichnet daß** die Bewertungszahl durch Differenz oder Quotientenbildung aus dem ersten und dem zweiten Kriterium berechnet wird.

**Claims**

**1.** Circuit arrangement for operating high-pressure discharge lamps having the following features:

• two connection terminals (J3, J4) for connecting a high-pressure discharge lamp (Lp), an operating voltage being applied between the connection terminals (J3, J4) during operation of a high-pressure discharge lamp,
• a measuring device (2) for measuring the operating voltage,
• an evaluation device (3), which is coupled to the measuring device (2) and is suitable for providing a rating number, which represents a measure of the change over time in the operating voltage, the evaluation device (3) evaluating the change over time in the operating voltage in a long-term window, which is longer than one hour, and the evaluation device (3) evaluating the change over time in the operating voltage in a short-term window, which is between 10 and 20 minutes long,
• a shutdown device (4), which interrupts operation of a connected high-pressure discharge lamp if the value of the rating number exceeds a predetermined limit value,

**characterized in that** the evaluation device (3) forms the difference or the quotient of the evaluation in the long-term window and the evaluation in the short-term window in order to provide the rating number.

**2.** Circuit arrangement according to Claim 1,
**characterized in that**
the evaluation device (3) calculates the rating number in accordance with the following formula:

$$Rating\ number = \sum_n (Criterion_n \cdot Weighting_n),$$

where n is a natural number and
$Criterion_1$ is the change over time in the operating voltage in a short-term window, which is between 10 and 20 minutes long,
$Criterion_2$ is the change over time in the operating voltage in a long-term window, which is longer than one hour,
$Criterion_3$ is $Criterion_1$ / $Criterion_2$,
$Criterion_4$ is the reciprocal of the instantaneous operating voltage,
and where $Weighting_n$ is a weighting factor for the respective criterion.

3. Circuit arrangement according to Claim 1,
   **characterized in that**,
   once it has first been brought into operation, the evaluation device (3) assesses an increasing operating voltage as positive and the limit value is positive and, in the course of the operation, the evaluation device (3) changes over to evaluating a falling operating voltage as positive.

4. Operating device for operating high-pressure discharge lamps which contains a circuit arrangement according to one of Claims 1 to 3.

5. Method for predicting the failure of a high-pressure discharge lamp with the following steps:

   • fixing a limit value
   • bringing the high-pressure discharge lamp into operation
   • determining a first criterion, which corresponds to the change over time in the operating voltage in a long-term window, which is longer than one hour;
   • determining a second criterion, which corresponds to the change over time in the operating voltage in a short-term window, which is between 10 and 20 minutes long;
   • calculating a rating number;
   • bringing the connected high-pressure discharge lamp out of operation if the value of the rating number exceeds a predetermined limit value;

   **characterized in that** the rating number is calculated by the difference or the quotient formation from the first and the second criterion.

**Revendications**

1. Circuit pour faire fonctionner des lampes à décharge à haute pression ayant des caractéristiques suivantes :

   • deux bornes (J3, J4) de connexion d'une lampe (Lp) à décharge à haute pression, une tension d'arc s'appliquant entre les bornes (J3, J4) de connexion pendant le fonctionnement d'une lampe à décharge à haute pression ;
   • un dispositif (2) de mesure de la tension d'arc ;
   • un dispositif (3) d'exploitation, qui est couplé au dispositif (2) de mesure et qui est propre à mettre à disposition un indice d'évaluation qui représente une mesure de la variation de la tension d'arc en fonction du temps, le dispositif (3) d'exploitation exploitant la variation en fonction du temps de la tension d'arc dans un long créneau temporel qui est plus long qu'une heure et le dispositif (3) d'exploitation exploitant la variation en fonction du temps de la tension d'arc dans un court créneau temporel qui a une longueur comprise entre 10 et 20 minutes ;
   • un dispositif (4) d'interruption, qui interrompt le fonctionnement d'une lampe à décharge à haute pression raccordée si la valeur de l'indice d'évaluation dépasse une valeur limite prescrite,

   **caractérisé en ce que** le dispositif (3) d'exploitation forme, pour mettre à disposition l'indice d'évaluation, la différence ou le quotient de l'évaluation dans le long créneau temporel et de l'évaluation dans le court créneau temporel.

2. Circuit suivant la revendication 1,
   **caractérisé en ce que**
   le dispositif (3) d'exploitation calcule l'indice d'évaluation selon la formule suivante :

$$\text{indice d'évaluation} = \sum_{n} (\text{critère}_n - \text{pondération}_n)$$

$n$ étant un nombre naturel et

critère$_1$ étant la variation temporelle de la tension d'arc dans un court créneau temporel dont la longueur est comprise entre 10 et 20 minutes,

critère$_2$ est la variation en fonction du temps de la tension d'arc dans un long créneau temporel qui est plus grand qu'une heure,

critère$_3$ est critère$_1$/critère$_2$,

critère$_4$ est l'inverse de la tension d'arc instantanée,

et dans laquelle pondération est un facteur de pondération du critère respectif.

3. Circuit suivant la revendication 1,
   **caractérisé en ce que**
   après une mise en fonctionnement, le dispositif (3) d'évaluation évalue positivement une tension d'arc croissante et la valeur limite est positive et, au cours du fonctionnement, le dispositif (3) d'exploitation en vient à évaluer positivement une tension d'arc décroissante.

4. Appareil pour faire fonctionner des lampes à décharge à haute pression qui comporte un circuit suivant l'une des revendications 1 à 3.

5. Procédé pour prédire la défaillance d'une lampe à décharge à haute pression ayant des stades suivants :

   • on fixe une valeur limite ;
   • on met la lampe à décharge à haute pression en fonctionnement ;
   • on détermine un premier critère qui correspond à la variation en fonction du temps de la tension d'arc dans un long créneau temporel qui est plus long qu'une heure ;
   • on détermine un deuxième critère qui correspond à la variation en fonction du temps de la tension d'arc dans un court créneau temporel dont la longueur est comprise entre 10 et 20 minutes ;
   • on calcule un indice d'évaluation;
   • on met la lampe à décharge à haute pression raccordée hors de fonctionnement si la valeur de l'indice d'évaluation dépasse une valeur limite prescrite ;

   **caractérisé en ce que** l'on calcule l'indice d'évaluation en formant la différence ou le quotient du premier et du deuxième critère.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2646538, Leleve
- DE 19715254 A1
- US 5422548 A, Yamashita
- EP 1076478 A2, Klinkenberg